(19) Europäisches Patentamt
European Patent Office
Office européen des brevets

(11) **EP 2 796 490 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(51) Int Cl.:
*C08J 9/32* *(2006.01)*    *C08J 9/12* *(2006.01)*

(21) Anmeldenummer: **14161497.4**

(22) Anmeldetag: **25.03.2014**

(54) **Dual geschäumte Polymermasse**

Dually foamed polymer composition

Composition polymère doublement expansée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2013 DE 102013207467**

(43) Veröffentlichungstag der Anmeldung:
**29.10.2014 Patentblatt 2014/44**

(73) Patentinhaber: **tesa SE**
**22848 Norderstedt (DE)**

(72) Erfinder:
- **Burmeister, Axel**
  **22527 Hamburg (DE)**
- **Czerwonatis, Franziska**
  **21075 Hamburg (DE)**

(56) Entgegenhaltungen:
EP-A1- 0 692 516       EP-B1- 1 102 809
DE-A1-102010 062 669     DE-T2- 60 000 314

- **DATABASE WPI Week 200613 Thomson Scientific, London, GB; AN 2006-121321 XP002724898, -& JP 2006 022189 A (NITTO DENKO CORP) 26. Januar 2006 (2006-01-26)**

**Beschreibung**

Die vorliegende Erfindung liegt auf dem technischen Gebiet der Polymerschäume, insbesondere der unter Verwendung von Mikrohohlkörpern hergestellten Polymerschäume, wie sie zum Beispiel für Montagezwecke, insbesondere zum Kleben, verwendet werden. Insbesondere betrifft die Erfindung einen Polymerschaum, der verschiedenartig umhüllte Hohlräume umfasst.

Geschäumte Polymersysteme sind seit längerem bekannt und im Stand der Technik beschrieben. Grundsätzlich lassen sich Polymerschäume auf zwei Wegen herstellen: zum einen durch die Einwirkung eines Treibgases, sei es als solches zugesetzt oder aus einer chemischen Reaktion resultierend, zum anderen durch die Einarbeitung von Hohlkügelchen in die Werkstoffmatrix. Schäume, die auf letzterem Wege hergestellt wurden, werden als syntaktische Schäume bezeichnet.

Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit.

Besonders vorteilhafte Eigenschaften lassen sich erzielen, wenn als Mikrohohlkugeln zur Schäumung expandierbare Mikrohohlkugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (bspw. Glashohlkugeln) gefüllt sind.

Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren.

Des Weiteren können durch die Auswahl des thermoplastischen Harzes der Polymerschale die mechanischen Eigenschaften des Schaums weiter beeinflusst werden. So ist es beispielsweise möglich, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit kombiniert werden, was beispielsweise bei einer Verwendung des Schaums als Haftklebemasse vorteilhaft sein kann.

Die deutsche Offenlegungsschrift 21 05 877 beschreibt einen Klebestreifen, der auf mindestens einer Seite seines Trägers mit einem druckempfindlichen Klebstoff beschichtet ist, welcher eine Vielzahl von mikroskopischen, kugelförmigen, geschlossenen Zellen enthält. Das Leervolumen der Klebstoffschicht beträgt 25 bis 85 %, und die Zellwände sind durch den Klebstoff ausgebildet.

EP 0 257 984 A1 offenbart Klebebänder, die zumindest einseitig eine geschäumte Klebebeschichtung aufweisen. In dieser Klebebeschichtung sind Polymerkügelchen enthalten, die eine Flüssigkeit aus Kohlenwasserstoffen enthalten und bei erhöhten Temperaturen expandieren. Die Gerüstpolymere der Selbstklebemassen können aus Kautschuken oder Polyacrylaten bestehen. Die Mikrohohlkugeln werden entweder vor oder nach der Polymerisation zugesetzt. Die Mikroballons enthaltenden Selbstklebemassen werden aus Lösemittel verarbeitet und zu Klebebändern ausgeformt. Der Schritt der Schäumung erfolgt dabei konsequent nach der Beschichtung. So werden mikroraue Oberflächen erhalten. Daraus resultieren Eigenschaften wie insbesondere zerstörungsfreie Wiederablösbarkeit und Repositionierbarkeit. Der Effekt der besseren Repositionierbarkeit durch mikroraue Oberflächen von mit Mikroballons geschäumten Selbstklebemassen wird auch in weiteren Schriften wie DE 35 37 433 A1 oder WO 95/31225 A1 beschrieben. Eine mikroraue Oberfläche kann gemäß EP 0 693 097 A1 und WO 98/18878 A1 auch zur Erzielung von blasenfreien Verklebungen verwendet werden.

Den vorteilhaften Eigenschaften der mikrorauen Oberflächen steht aber immer eine deutliche Reduzierung der Verklebungsfestigkeit beziehungsweise der Schälfestigkeit gegenüber. Daher wird in DE 197 30 854 A1 eine mit Mikroballons aufgeschäumte Trägerschicht vorgeschlagen, welche die Verwendung von ungeschäumten druckempfindlichen Selbstklebemassen ober- und unterhalb eines geschäumten Kerns vorschlägt.

Die Anfertigung der Trägermischung findet vorzugsweise in einem für die Elastomer-Compoundierung typischen Innenmischer statt. Der Mischung werden in einem zweiten kühlen Arbeitsgang mögliche Vernetzer, Beschleuniger und die gewünschten Mikroballons zugesetzt. Dieser zweite Arbeitsgang findet vorzugsweise bei Temperaturen kleiner 70 °C in einem Kneter, Innenmischer, Mischwalzwerk oder Doppelschneckenextruder statt. Die Mischung wird anschließend maschinell auf die gewünschte Dicke extrudiert und/oder kalandriert. Anschließend wird der Träger beidseitig mit einer druckempfindlichen Selbstklebemasse versehen.

Um Beschädigungen der Mikroballons durch die bei der Einarbeitung der Ballons wirkenden Kräfte zu vermeiden, wird die Schäumung bevorzugt nach der bahnförmigen Ausformung in einem Thermokanal durchgeführt. Hierbei kommt es leicht zu stärkeren Abweichungen der mittleren Trägerdicke von der gewünschten Dicke, insbesondere aufgrund nicht durchgehend konstanter Prozessbedingungen vor und/oder während der Schäumung. Eine gezielte Korrektur der Dicke ist nicht mehr möglich. Ebenso müssen erhebliche statistische Abweichungen in der Dicke in Kauf genommen werden, da sich lokale Abweichungen in der Konzentration von Mikroballons und auch anderer Trägerbestandteile direkt in Dickenschwankungen bemerkbar machen.

Einen ähnlichen Weg beschreibt die WO 95/32851 A1. Hier wird vorgeschlagen, zwischen geschäumtem Träger und Selbstklebemasse zusätzliche thermoplastische Schichten vorzusehen.

Beide Wege erfüllen zwar die Anforderung einer hohen Schälfestigkeit, führen aber insgesamt zu mechanisch recht anfälligen Produkten, weil die einzelnen Schichten unter Belastung zu Verankerungsbrüchen neigen. Darüber hinaus wird die gewünschte Anpassungsfähigkeit solcher Produkte an unterschiedliche Oberflächenbeschaffenheiten deutlich eingeschränkt, weil der geschäumte Anteil des Aufbaus zwangsläufig reduziert wird.

EP 1 102 809 A1 schlägt ein Verfahren vor, in dem die Mikroballons zumindest teilweise bereits vor Austritt aus einer Beschichtungsdüse expandieren und gegebenenfalls durch einen nachgeschalteten Schritt zur vollständigen Expansion gebracht werden. Dieses Verfahren führt zu Produkten mit deutlich geringerer Oberflächenrauigkeit und einem damit verbundenen geringeren Abfall der Schälfestigkeit.

In JP 2006 022189 wird eine viskoelastische Zusammensetzung beschrieben, die eine Bläschenstruktur und kugelförmige Mikrohohlkörper aufweist, sowie ein druckempfindliches Klebeband oder eine druckempfindliche Klebefolie, für das/die die viskoelastische Zusammensetzung verwendet wird. Die Luftbläschen werden in einer siruppartigen Polymerzusammensetzung eingemischt. Die Blasen fließen aufgrund der geringen Viskosität zusammen und bilden größere Luftblasen, deren Größe und Verteilung nicht steuerbar ist.

Es besteht ein anhaltender Bedarf an mit Hilfe von Mikrohohlkörpern hergestellten Schäumen, welche die aus dieser Technologie resultierenden vorteilhaften Eigenschaften aufweisen und bei denen nachteilige Eigenschaften vermieden oder zumindest reduziert werden.

Aufgabe der Erfindung ist es somit, einen mit Hilfe von Mikrohohlkörpern erzeugten, stabilen Polymerschaum mit einer möglichst gleichmäßigen Größenverteilung der Schaumzellen zur Verfügung zu stellen, der sich insbesondere durch hohe Verklebungsfestigkeit und ein gutes Stauchhärte-Verhalten auszeichnet.

Der Lösung der Aufgabe liegt der Gedanke zugrunde, einen bestimmten Anteil von der Schaummatrix umschlossener Hohlräume in den Schaum einzubringen. Ein erster Gegenstand der Erfindung ist daher ein Polymerschaum, der von Mikroballons gebildete Hohlräume sowie 6 bis 16 Vol.-%, bezogen auf das Gesamtvolumen des Polymerschaums, Hohlräume umfasst, die von der Polymerschaummatrix umschlossen sind, und der dadurch gekennzeichnet ist, dass der Polymerschaum eine Haftklebemasse ist und die Mikroballons in ihrem Grundzustand expandierbare, mit niedrigsiedenden Flüssigkeiten oder verflüssigtem Gas gefüllte und eine thermoplastische Polymerhülle aufweisende Mikrohohlkugeln sind. Ein derartiger Schaum weist gegenüber einem Schaum, dessen Hohlräume ausschließlich von Mikrohohlkörpern gebildet werden, eine erhöhte Verklebungsfestigkeit auf, die sich in entsprechenden Tests in kohäsiven Bruchbildern äußert. Darüber hinaus lässt sich ein erfindungsgemäßer Schaum einfacher komprimieren und zeigt ein verbessertes Rückstellvermögen.

Unter einem "Polymerschaum" wird ein Werkstoff mit über seine ganze Masse verteilten offenen und/oder geschlossenen Zellen verstanden, der eine Rohdichte aufweist, die niedriger ist als die der Gerüstsubstanz. Bei der Gerüstsubstanz, im Folgenden auch als Polymerschaummatrix, Schaummatrix, Matrix oder Matrixmaterial bezeichnet, handelt es sich erfindungsgemäß um ein oder mehrere Polymere, die mit Zuschlagstoffen abgemischt sein können.

Bevorzugt enthält der erfindungsgemäße Polymerschaum zu mindestens 25 Gew.-%, bezogen auf das Gesamtgewicht des Polymerschaums, ein oder mehrere Polymer(e), die ausgewählt sind aus der Gruppe bestehend aus Polyacrylaten, Naturkautschuken und Synthesekautschuken. Generell können auch Mischsysteme unterschiedlich basierter Klebemassen enthalten sein, beispielsweise also Blends, die auf zweien oder mehreren der folgenden chemischen Verbindungsklassen basieren: Natur- und Synthesekautschuke, Polyacrylate, Polyurethane, Silikonkautschuke, Polyolefine. Auch Copolymere aus Monomeren der vorstehenden Polymerklassen und/oder weiteren Monomeren) sind erfindungsgemäß einsetzbar.

Die erfindungsgemäß einsetzbaren Naturkautschuke können grundsätzlich aus allen erhältlichen Qualitäten, wie zum Beispiel Crepe-, RSS-, ADS-, TSR- oder CV-Typen, je nach benötigtem Reinheits- und Viskositätsniveau ausgewählt werden. Die erfindungsgemäß einsetzbaren Synthesekautschuke werden bevorzugt aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends ausgewählt. Darüber hinaus können die Synthesekautschuke auch thermoplastische Elastomere, beispielsweise Styrolblockcopolymere wie insbesondere Styrol-Isopren-Styrol (SIS)- und Styrol-Butadien-Styrol (SBS)-Typen, umfassen. Es können auch beliebige Blends aus verschiedenen Naturkautschuken oder aus verschiedenen Synthesekautschuken oder aus verschiedenen Natur- sowie Synthesekautschuken eingesetzt werden.

Der erfindungsgemäße Polymerschaum kann auch Polymere aus der Gruppe der Polyacrylate enthalten. Dabei ist es vorteilhaft, wenn zumindest ein Teil der zugrundeliegenden Monomere funktionelle Gruppen aufweist, die in einer thermischen Vernetzungsreaktion reagieren können und/oder eine thermische Vernetzungsreaktion fördern.

Erfindungsgemäß bevorzugt enthält der Polymerschaum zu mindestens 25 Gew.-%, bezogen auf das Gesamtgewicht des Polymerschaums, ein Polyacrylat, welches auf die folgende Monomerzusammensetzung zurückgeführt werden kann:

a) Acrylsäureester und/oder Methacrylsäureester der folgenden Formel

$$CH_2 = C(R^I)(COOR^{II}),$$

wobei $R^I$ = H oder $CH_3$ und $R^{II}$ ein Alkylrest mit 4 bis 14 C-Atomen ist,
b) olefinisch ungesättigte Monomere mit funktionellen Gruppen, die eine Reaktivität mit den Vernetzersubstanzen oder einem Teil der Vernetzersubstanzen aufweisen,
c) optional weitere Acrylate und/oder Methacrylate und/oder olefinisch ungesättigte Monomere, die mit der Komponente (a) copolymerisierbar sind.

Für eine erfindungsgemäße Anwendung des Polymerschaums als Haftkleber sind die Anteile der entsprechenden Komponenten (a), (b), und (c) insbesondere derart gewählt, dass das Polymerisationsprodukt eine Glastemperatur ≤ 15 °C (DMA bei geringen Frequenzen) aufweist. Dazu ist es vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen, wobei die Angaben auf die Monomermischung für das "Basispolymer", also ohne Zusätze eventueller Additive zu dem fertigen Polymer wie Harze etc. bezogen sind.

Für eine nicht erfindungsgemäße Anwendung des Polymerschaums als Heißschmelzkleber, also als ein Material, welches erst durch Erwärmen haftklebrig wird, werden die Anteile der entsprechenden Komponenten (a), (b), und (c) insbesondere derart gewählt, dass das Copolymer eine Glasübergangstemperatur ($T_G$) zwischen 15 °C und 100 °C aufweist, stärker bevorzugt zwischen 30 °C und 80°C und besonders bevorzugt zwischen 40°C und 60°C.

Ein viskoelastischer Polymerschaum, welcher beispielsweise beidseitig mit haftklebrigen Schichten kaschiert sein kann, hat bevorzugt eine Glasübergangstemperatur ($T_G$) zwischen -50 °C und +100 °C, besonders bevorzugt zwischen -20 °C und + 60°C, insbesondere zwischen 0°C und 40°C. Die Anteile der Komponenten (a), (b), und (c) können auch hier entsprechend gewählt werden.

Die Monomere der Komponente (a) sind insbesondere weichmachende und/oder unpolare Monomere.

Vorzugsweise werden für die Monomere (a) Acrylmonomere eingesetzt, die Acryl- und Methacrylsäureester mit Alkylgruppen, enthaltend 4 bis 14 C-Atome, bevorzugt 4 bis 9 C-Atome, umfassen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigte Isomere, wie z. B. 2-Ethylhexylacrylat und 2-Ethylhexylmethacrylat.

Die Monomere der Komponente (b) sind insbesondere olefinisch ungesättigte Monomere mit funktionellen Gruppen, die eine Reaktion mit Epoxidgruppen eingehen können. Bevorzugt werden daher für die Komponente (b) Monomere mit funktionellen Gruppen eingesetzt, die aus der folgenden Gruppe ausgewählt sind: Hydroxy-, Carboxy-, Sulfonsäure-, Phosphonsäuregruppen, Säureanhydride, Epoxide, Amine.
Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Für die Polyacrylate der Komponente (c) können prinzipiell alle vinylisch funktionalisierten Verbindungen eingesetzt werden, die mit der Komponente (a) und/oder der Komponente (b) copolymerisierbar sind. Bevorzugt dienen diese Monomere auch zur Einstellung der Eigenschaften des resultierenden Polymerschaums.

Beispielhaft seien folgende Monomere für die Komponente (c) aufgeführt:

Methylacrylat, Ethylacrylat, Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat,
Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, N-Methylolmethacrylamid,
Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, a- und p-Methylstyrol, a-Butylstyrol, 4-n-Butylstyrol, 4-n-Decylstyrol, 3,4-Dimethoxystyrol. Makromonomere wie 2-Polystyrolethylmethacrylat (Molekulargewicht Mw von 4000 bis 13000 g/mol), Poly(Methylmethacrylat)ethylmethacrylat (Mw von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind z.B. Benzoinacrylat und acrylatfunktionalisierte Benzophenonderivate. Monomere, die eine Vernetzung durch Elektronenbestrahlung unterstützen, sind z.B. Tetrahydrofufurylacrylat, N-tert-Butylacrylamid und Allylacrylat.

Der erfindungsgemäße Polymerschaum umfasst von Mikroballons gebildete Hohlräume. Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 $\mu$m Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Akzo Nobel. Wenn der Mikroballontyp beziehungsweise die Schäumungstemperatur auf das zur Massecompoundierung benötigte Temperaturprofil und die Maschinenparameter abgestimmt ist, können Massecompoundierung und Schäumung auch gleichzeitig in einem Schritt erfolgen.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung erfindungsgemäßer Polymerschäume geeignet.

Erfindungsgemäße Polymerschäume können auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung DE (Dry Expanded) kommerziell erhältlich.

Erfindungsgemäß bevorzugt weisen mindestens 90 % aller von Mikroballons gebildeten Hohlräume einen maximalen Durchmesser von 10 bis 500 $\mu$m, stärker bevorzugt von 15 bis 200 $\mu$m, auf. Unter dem "maximalen Durchmesser" wird die maximale Ausdehnung eines Mikroballons in beliebiger Raumrichtung verstanden.

Es hat sich in Versuchen erwiesen, dass der erzielbare Mikroballondurchmesser sehr stark von dem verwendeten Polymer und Verfahren abhängig ist. Für die Verfahrenswahl hat es sich zur Erzielung maximal expandierter Mikroballons als vorteilhaft erwiesen, die Mikroballons oberhalb der Schäumungsstarttemperatur einem Druck unterhalb des Atmosphärendrucks auszusetzen. Hierbei werden zwar einige wenige, sehr große Mikroballons zerstört, die große Mehrzahl der Mikroballons expandiert aber vollständig. So sind sehr stabile syntaktische Schäume erhältlich, die eine überaus geringe Durchmesserverteilung aufweisen. Die maximal erreichbaren, mittleren Durchmesser steigen mit abnehmender Kohäsion des umgebenden Polymers bei der Schäumungstemperatur. Die erfindungsgemäß verwendbaren Polymere und Mikroballons ergeben besonders bevorzugt mittlere Durchmesser von 25 bis 40 $\mu$m, wobei die Streuung der Mittelwerte der Einzelmessungen vom Gesamtmittelwert eines Musters um nicht mehr als 2 $\mu$m abweicht.

Die Bestimmung der Durchmesser erfolgt anhand einer Kryobruchkante im Rasterelektronenmikroskop (REM) bei 500-facher Vergrößerung. Von jedem einzelnen Mikroballon wird grafisch der Durchmesser ermittelt. Der Mittelwert einer Einzelmessung ergibt sich aus dem Mittelwert der Durchmesser aller Mikroballons eines Kryobruches, der Gesamtmittelwert aus dem Mittelwert über 5 Einfachmessungen. Auch die einzelnen Mikroballons in den syntaktischen Schäumen nach diesem Verfahren weisen eine sehr enge Größenverteilung auf, in der Regel sind mehr als 95% aller Mikroballons kleiner als das Doppelte des Mittelwerts.

Der erfindungsgemäße Polymerschaum umfasst ferner 6 bis 16 Vol.-%, bezogen auf das Gesamtvolumen des Polymerschaums, Hohlräume, die von der Polymerschaummatrix umschlossen sind. Der Ausdruck "umschlossen" wird erfindungsgemäß so verstanden, dass damit ein vollständiges Umschließen der entsprechenden Hohlräume gemeint ist.

"Von der Polymerschaummatrix umschlossen" bedeutet, dass das Gas des betreffenden Hohlraums direkt vom Matrixmaterial des Schaums umgeben ist, während das den Hohlraum direkt umgebende Material bei den von Mikroballons gebildeten Hohlräumen das Hüllenmaterial der Mikroballons ist. Ein erfindungsgemäßer Polymerschaum enthält somit sowohl Hohlräume mit eigener Hülle als auch Hohlräume ohne eigene Hülle, wobei mit dem Ausdruck "eigene Hülle" ein von der Polymerschaummatrix verschiedenes Material gemeint ist. Diese Dualität der Schaumzellen ist wesentlich für die hervorragenden Eigenschaften des erfindungsgemäßen Schaums.

Die von der Polymerschaummatrix umschlossenen Hohlräume enthalten bevorzugt Luft. Diese Luft resultiert aus dem später in diesem Text vorgestellten Verfahren zur Herstellung eines erfindungsgemäßen Schaums.

Bevorzugt enthält ein erfindungsgemäßer Polymerschaum 9 bis 15,8 Vol.-%, beispielsweise 10 bis 15,5 Vol.-%, jeweils bezogen auf das Gesamtvolumen des Polymerschaums, Hohlräume, die von der Polymerschaummatrix umschlossen sind. Bei diesen bevorzugten Volumenanteilen werden insbesondere die höchsten Verklebungsfestigkeiten erreicht, was für eine erfindungsgemäße Verwendung des Polymerschaums als Haftklebemasse von großer Bedeutung ist.

Das Volumenverhältnis der von Mikroballons gebildeten Hohlräume zu den von der Polymerschaummatrix umschlossenen Hohlräumen beträgt bevorzugt von 0,5 bis 10, besonders bevorzugt von 0,6 bis 6, insbesondere von 0,7 bis 4 und ganz besonders bevorzugt von 1 bis 3, beispielsweise von 2 bis 2,6.

Bevorzugt weisen mindestens 90 % aller Hohlräume, die von der Polymerschaummatrix umschlossen sind, einen maximalen Durchmesser von $\leq 200\ \mu m$ auf. Unter dem "maximalen Durchmesser" wird die größte Ausdehnung des betreffenden Hohlraums in einer beliebigen Raumrichtung verstanden. Hohlräume bzw. Blasen mit dem bevorzugten Durchmesser zeigen eine geringere Tendenz zum Zusammenfließen und der damit verbundenen Bildung größerer Blasen. Dies ist vorteilhaft für die Homogenität des Eigenschaftsprofils über den gesamten Schaum hinweg.

Die Bestimmung der Durchmesser erfolgt - wie vorstehend schon für die Mikrohohlkugel beschrieben - anhand einer Kryobruchkante im Rasterelektronenmikroskop (REM) bei 500-facher Vergrößerung. Von jedem einzelnen Hohlraum wird grafisch der maximale Durchmesser ermittelt. Der Mittelwert einer Einzelmessung ergibt sich aus dem Mittelwert der Durchmesser aller Hohlräume eines Kryobruches, der Gesamtmittelwert aus dem Mittelwert über 5 Einfachmessungen.

Erfindungsgemäß ist der Polymerschaum eine Haftklebemasse. In diesem Fall wirkt sich insbesondere die höhere erzielbare Klebkraft bzw. die höhere Verklebungsfestigkeit der mit dem Schaum hergestellten Verklebungen sehr vorteilhaft aus. Haft- bzw. Selbstklebemassen sind solche Klebemassen, die bei Raumtemperatur permanent klebrig sind. Selbstklebende Erzeugnisse (also mit Selbstklebemassen ausgerüstete Erzeugnisse wie Selbstklebebänder und dergleichen) zeigen viskoelastische Eigenschaften und kleben bereits nach Anwendung von leichtem Druck auf den meisten Oberflächen. Eine Aktivierung durch Anfeuchten oder Erwärmen ist nicht erforderlich.

Das Massesystem bzw. die Zusammensetzung des Schaums kann weiterhin derart gewählt sein, dass der Polymerschaum als Trägerschicht, insbesondere für ein ein- oder doppelseitiges Klebeband, eingesetzt werden kann. Hierzu wird eine Schicht des erfindungsgemäßen Polymerschaums ein- oder beidseitig mit einer Klebemassenschicht, insbesondere mit einer Selbstklebemassenschicht, ausgerüstet. Die vorstehenden Ausführungen zur chemischen Beschaffenheit des Polymerschaums gelten hierfür analog.

Geschäumte Trägerschichten können auch für sogenannte "Seal Tapes" eingesetzt werden, indem sie einseitig oder jeweils beidseitig mit einer insbesondere bei Raumtemperatur schwachklebrigen oder nicht klebrigen Polymermasse beschichtet wird, die bei Zufuhr von Wärmeenergie aktiviert und klebrig werden - einer sogenannten hitzeaktivierbaren Klebmasse. Hitzeaktivierbare Klebemassen entwickeln erst bei thermischer Energiezufuhr hinreichend die für den Anwendungszweck notwendigen Klebeigenschaften. Als hitzeaktivierbare Klebemassen können thermoplastische hitzeaktivierbare Klebemassen - sogenannte Schmelzkleber - und/oder reaktive hitzeaktivierbare Klebemassen eingesetzt werden. Unter Schmelzklebern werden meist lösemittelfreie Klebstoffe verstanden, die erst in der Hitze eine hinreichende Fließfähigkeit entwickeln, um (Selbst-)Klebkräfte zu entwickeln. Unter reaktiven hitzeaktivierbaren Klebemassen werden Klebmassen verstanden, in denen bei Wärmezufuhr eine chemische Reaktion stattfindet, wodurch die Klebmasse chemisch abbindet, was wiederum den Klebeeffekt bewirkt.

Sind die Seal-Tapes einseitig mit einer hitzeaktivierbaren Klebeschicht versehen, so weist die zweite Seal-Tape-Seite durch die haftklebrige Gestaltung der Trägerschicht selbstklebrige Eigenschaften auf. Die geschäumten Selbstklebemassenschichten und/oder geschäumten Trägerschichten bieten den Vorteil, dass sie in einem großen Dickenbereich hergestellt werden können. Unter anderem lassen sich auch sehr dicke Schichten realisieren, die vorteilhaft druck- und stoßabsorbierende Eigenschaften und/oder Rauigkeit ausgleichende Eigenschaften aufweisen. Selbstklebebänder mit derartig geschäumter Selbstklebemassenschicht oder - schichten und/oder mit derartig geschäumter Trägerschicht eignen sich daher besonders gut zur Verklebung in Vorrichtungen mit zerbrechlichen Komponenten wie Fenstern.

Der erfindungsgemäße Polymerschaum liegt bevorzugt als Schicht in einem Dickenbereich von bis zu mehreren Millimetern vor, besonders bevorzugt im Bereich von 20 $\mu$m bis 5000 $\mu$m, insbesondere von 50 $\mu$m bis 3000 $\mu$m, ganz besonders bevorzugt von 400 $\mu$m bis 2100 $\mu$m. Ein weiterer Vorteil der geschäumten Selbstklebemassenschichten und/oder geschäumten Trägerschichten ist deren hervorragende Kälteschlagbeständigkeit.

Das Raumgewicht (Rohdichte) eines erfindungsgemäßen Polymerschaums liegt bevorzugt im Bereich von 150 bis 900 kg/m$^3$, stärker bevorzugt von 350 bis 880 kg/m$^3$. Unter Verwendung des erfindungsgemäßen Polymerschaums hergestellte Klebebänder können gestaltet sein als

- einschichtige, beidseitig selbstklebende Klebebänder - sogenannte "Transfertapes" - aus einer einzigen Schicht einer geschäumten Selbstklebemasse;
- einseitig selbstklebend ausgerüstete Klebebänder - nachfolgend "einseitige Selbstklebebänder" - bei denen die Selbstklebemassenschicht eine Schicht des erfindungsgemäßen Polymerschaums ist; zum Beispiel Zweischichtsysteme aus einer geschäumten Selbstklebemasse und einer nicht geschäumten Selbstklebemasse oder einer hitzeaktivierbaren Klebemasse oder einer geschäumten oder nicht geschäumten Trägerschicht;
- beidseitig selbstklebend ausgerüstete Klebebänder - nachfolgend "doppelseitige Selbstklebebänder" - bei denen eine, insbesondere beide Selbstklebemassenschichten eine Schicht des erfindungsgemäßen Polymerschaums ist bzw. sind, und/oder bei denen die Trägerschicht eine Schicht des erfindungsgemäßen Polymerschaums ist;
- doppelseitige Klebebänder mit einer hitzeaktivierbaren Klebeschicht auf einer der Klebebandseiten und einer Selbstklebemassenschicht auf der anderen Klebebandseite, bei denen die Trägerschicht und/oder die Selbstklebemassenschicht eine Schicht des erfindungsgemäßen Polymerschaums ist;
- doppelseitige Klebebänder mit einer hitzeaktivierbaren Klebeschicht auf beiden Klebebandseiten, bei denen die Trägerschicht eine Schicht des erfindungsgemäßen Polymerschaums ist.

Dabei können die doppelseitigen Produkte, egal ob zur Verklebung oder zur Dichtung gedacht, einen symmetrischen oder einen asymmetrischen Produktaufbau aufweisen. Bevorzugt sind die Polymere der Schaummatrix zumindest teilweise vernetzt, um eine Verbesserung der Kohäsion zu erzielen. Es ist daher vorteilhaft, der Masse zur Herstellung der Polymerschaummatrix Vernetzer und gegebenenfalls Beschleuniger und/oder Inhibitoren (Verzögerer) zuzusetzen. Im Folgenden werden die zur Initiierung und zur Steuerung zugesetzten Komponenten wie Vernetzer und Beschleuniger gemeinsam auch als "Vernetzungssystem" bezeichnet. Als Vernetzungsverfahren eignen sich strahleninitiierte Vernetzungsverfahren - insbesondere durch aktinische oder ionisierende Strahlung wie Elektronenstrahlen und/oder ultraviolette Strahlung - und/oder thermisch initiierte Vernetzungsverfahren, wobei zu letzteren auch Verfahren gerechnet werden, bei denen die Aktivierungsenergie bereits bei Raumtemperatur oder darunter ohne zusätzliche Anwendung von Strahlung, wie aktinischer oder ionisierender Strahlung, aufgebracht werden kann. Eine strahleninitiierte Vernetzung kann insbesondere durch Bestrahlung mit Elektronenstrahlen und/oder mit UV-Strahlung erzielt werden. Hierzu sind der zu vernetzenden Polymermasse vorteilhaft entsprechende strahlenaktivierbare Vernetzer zugesetzt. Um bei Schichten, insbesondere bei Trägerschichten oder beidseitig klebend ausgerüsteten Klebebändern, eine beidseitig gleichmäßige Oberfläche zu erzielen, kann man derart vorgehen, dass diese Produkte beidseitig unter den gleichen Bedingungen bestrahlt werden.

Im Falle einer Vernetzung mit Elektronenstrahlen kommen vorteilhaft Bestrahlungsvorrichtungen wie Linearkathodensysteme, Scannersysteme oder Segmentkathodensysteme, jeweils in einer Ausführung als Elektronenstrahlbeschleuniger, zum Einsatz. Typische Beschleunigungsspannungen liegen im Bereich zwischen 50 kV und 500 kV, vorzugsweise zwischen 80 kV und 300 kV. Die angewandten Streudosen bewegen sich beispielsweise zwischen 5 bis 150 kGy, insbesondere zwischen 20 und 100 kGy. Hierfür können die gängigen Vernetzungssubstanzen (Elektronenstrahl-Vernetzer) zu der Polymermasse zugesetzt werden. Besonders bevorzugt ist die Bestrahlung unter Ausschluss von Luft durch Inertisierung mit Stickstoff oder Edelgasen oder durch beidseitige Eindeckung mit Trennmaterialien, wie trennend ausgerüsteten Folien.

Zur optionalen Vernetzung mit UV-Licht können den Schaummatrices UV-absorbierende Photoinitiatoren zugesetzt werden, insbesondere solche Verbindungen, die durch UV-Aktivierung Radikale bilden. Hervorragend geeignete UV-Photoinitiatoren sind solche Verbindungen, die bei UV-Bestrahlung eine Photofragmentierungsreaktion eingehen, insbesondere eine Spaltung in $\alpha$-Stellung zu einer photochemisch anregbaren funktionellen Gruppe. Derartige Photoinitiatoren sind solche des Norrish-I-Typs. Weitere hervorragend geeignete Photoinitiatoren sind solche Verbindungen, die bei UV-Bestrahlung mit einer intramolekularen Wasserstoff-Abstraktion, ausgelöst durch eine photochemisch angeregte funktionelle Gruppe, insbesondere in γ-Stellung, reagieren. Derartige Photoinitiatoren werden zum Norrish-II-Typ gezählt. Weiterhin kann es vorteilhaft sein, copolymerisierbare Photoinitiatoren einzusetzen, indem in das zu vernetzende Polymer Monomere einpolymerisiert werden, die funktionelle Gruppen aufweisen, welche durch die Aktivierung mit UV-Strahlen Vernetzungsreaktionen initiieren können.

Es kann von Vorteil sein, wenn die Polymere nicht mittels aktinischer und/oder ionisierender Strahlung vernetzt werden. In diesen Fällen kann die Vernetzung unter Ausschluss von UV-Vernetzern und/oder von Elektronenstrahl-Vernetzern durchgeführt werden, so dass auch die erhaltenen Produkte keine UV-Vernetzer und/oder keine ESH-Vernetzer und/oder Reaktionsprodukte hiervon aufweisen.

Ein erfindungsgemäßer Polymerschaum zeigt besonders vorteilhafte Eigenschaften, wenn die die Hohlkörper umgebende Polymermasse homogen vernetzt ist. Zwar lassen sich dicke Schichten - wegen der über der Eindringtiefe rasch abnehmenden Strahlungsintensität - kaum über die übliche Elektronenstrahlen- oder UV-Strahlenbehandlung homogen vernetzen, aber eine thermische Vernetzung schafft hierfür hinreichende Abhilfe. In der Herstellung besonders dicker Schichten eines erfindungsgemäßen Polymerschaums, insbesondere solcher Schichten, die mehr als 150 μm dick sind, ist es daher besonders vorteilhaft, wenn die zu schäumende Polymermasse mit einem thermischen Vernetzer-System ausgestattet ist.

Als derartige Vernetzer insbesondere für Polyacrylate eignen sich Isocyanate, insbesondere trimerisierte Isocyanate und/oder blockierungsmittelfreie und sterisch gehinderte Isocyanate, Epoxidverbindungen wie Epoxid-Amin-Vernetzersysteme, jeweils bei Anwesenheit funktioneller Gruppen in den Polymer-Makromolekülen, die mit Isocyanatgruppen bzw. Epoxidgruppen reagieren können.

Um die Reaktivität der Isocyanate abzuschwächen, können vorteilhaft mit thermisch abspaltbaren funktionellen Gruppen blockierte Isocyanate eingesetzt werden. Zur Blockierung werden bevorzugt aliphatische primäre und sekundäre Alkohole, Phenolderivate, aliphatische primäre und sekundäre Amine, Lactame, Lactone und Malonsäureester verwendet.

Werden Epoxid-Amin-Systeme als Vernetzersysteme eingesetzt, können die Amine in ihre Salze überführt werden, um eine Erhöhung der Topfzeit zu gewährleisten. Dabei werden leicht flüchtige organische Säuren (Ameisensäure, Essigsäure) oder leicht flüchtige Mineralsäuren (Salzsäure, Derivate der Kohlensäure) zur Salzbildung bevorzugt.

Die Verwendung thermischer Vernetzer bzw. thermischer Vernetzersysteme ist für einen erfindungsgemäßen Polymerschaum insbesondere deshalb vorteilhaft, weil durch die Hohlräume das Eindringen von aktinischer Strahlung in die Schicht behindert wird. Durch die Phasenübergänge an der Kavernenhüllen kommt es zu Brechungs- und Streueffekten, so dass die inneren Schichtbereiche von der Strahlung nicht oder nur stark vermindert erreicht werden können, wobei dieser Effekt den vorgenannten Effekt einer an sich begrenzten Eindringtiefe noch überlagert. Daher ist die thermische Vernetzung zur Erzielung einer homogen vernetzten Polymermatrix von großem Vorteil.

Die Schäumung der expandierbaren Mikroballons findet bei erhöhten Temperaturen statt, woraus sich ein grundsätzliches Problem beim Einsatz thermischer Vernetzer ergibt. Die Wahl der oben genannten, relativ reaktionsträgen Vernetzer und die Wahl der genannten Vernetzer-Beschleuniger-Systeme zur Kinetik-Regulierung der Vernetzungsreaktion sind für die erfindungsgemäßen Polymerschäume besonders vorteilhaft, da diese Vernetzer die für die Schäumung erforderlichen Temperaturen zu überstehen in der Lage sind.

Als besonders bevorzugt für den erfindungsgemäßen Polymerschaum hat sich ein Vernetzer-Beschleuniger-System herausgestellt, das zumindest eine epoxidgruppenhaltige Substanz als Vernetzer und zumindest eine bei einer Temperatur unterhalb der Schmelztemperatur des Polyacrylats für die Verknüpfungsreaktion beschleunigend wirkende Substanz als Beschleuniger umfasst. Das System setzt einen Gehalt der Polymere an funktionellen Gruppen voraus, die mit Epoxidgruppen Vernetzungsreaktionen eingehen können. Als epoxidgruppenhaltige Substanzen eigenen sich multifunktionelle Epoxide, insbesondere bifunktionelle oder trifunktionelle (also solche Epoxide mit zwei bzw. drei Epoxidgruppen), aber auch höherfunktionelle Epoxide oder Mischungen unterschiedlich funktioneller Epoxide. Als Beschleuniger können bevorzugt Amine (formell als Substitutionsprodukte des Ammoniaks aufzufassen), beispielsweise primäre und/oder sekundäre Amine; insbesondere tertiäre und/oder multifunktionelle Amine eingesetzt werden. Einsetzbar sind auch Substanzen, die mehrere Amingruppen aufweisen, wobei diese Amingruppen primäre und/oder sekundäre und/oder tertiäre Amingruppen sein können, insbesondere Diamine, Triamine und/oder Tetramine. Insbesondere werden solche Amine gewählt, die mit den Polymerbausteinen keine oder nur geringfügige Reaktionen eingehen. Als Beschleuniger können weiterhin beispielweise solche auf Phosphorbasis, wie Phosphine und/oder Phosphoniumverbindungen, eingesetzt werden.

Mittels dieser Systeme lassen sich insbesondere Polymere auf Basis von Acrylsäureestern und/oder Methacrylsäureestern vernetzen, wobei vorteilhaft zumindest ein Teil der Ester die funktionellen Gruppen enthält und/oder Comonomere vorhanden sind, die die funktionellen Gruppen aufweisen. Als funktionelle Gruppen des zu vernetzenden Polymers, insbesondere eines solchen auf (Meth-)Acrylatbasis, eigenen sich besonders Säuregruppen (beispielsweise Carbonsäure-, Sulfonsäure- und/oder Phosphonsäuregruppen) und/oder Hydroxygruppen und/oder Säureanhydridgruppen und/oder Epoxidgruppen und/oder Amingruppen. Es ist besonders vorteilhaft, wenn das Polymer einpolymerisierte Acrylsäure und/oder Methacrylsäure enthält.

Es kann jedoch auch vorteilhaft sein, auf Beschleuniger zu verzichten, da diese zum Beispiel zum Vergilben neigen können (insbesondere stickstoffhaltige Substanzen), was beispielsweise für transparente Polymere bzw. Schaummassen für Anwendungen im optischen Bereich störend sein kann. Als Vernetzer, die ohne Beschleunigerzusatz auskommen, eignen sich beispielweise Epoxycyclohexylderivate; insbesondere bei Anwesenheit von Carbonsäuregruppen im zu vernetzenden Polymer. Dies kann zum Beispiel durch mindestens 5 Gew.-% einpolymerisierte Acrylsäure in das Polymer realisiert sein. In dem zu vernetzenden Polymer sind vorteilhaft insbesondere keine Protonenakzeptoren, keine Elektronenpaar-Donatoren (Lewisbasen) und/oder keine Elektronenpaarakzeptoren (Lewissäuren) zugegen. Die Abwesenheit dieser Substanzen bezieht sich dabei insbesondere auf extern zugesetzte, also nicht einpolymerisierte bzw. in das Polymergerüst eingebaute, Beschleuniger, besonders bevorzugt sind aber weder extern zugesetzte noch einpolymerisierte, insbesondere gar keine Beschleuniger zugegen. Als besonders vorteilhafte Vernetzer haben sich Epoxycyclohexylcarboxylate wie (3,4-Epoxycyclohexan)methyl-3,4-epoxycyclohexylcarboxylat herausgestellt.

Je nach Anwendungsgebiet und gewünschten Eigenschaften des erfindungsgemäßen Polymerschaums können diesem weitere Komponenten und/oder Additive zugesetzt sein, und zwar jeweils allein oder in Kombination mit einem oder mehreren anderen Additiven oder Komponenten.

Bevorzugt sind einem erfindungsgemäßen Polymerschaum Zuschlagstoffe wie beispielsweise Harze, insbesondere Klebharze und/oder thermoplastische Harze, beigemischt. Als Harze im Sinne dieser Schrift werden oligo- und polymere Verbindungen mit einem zahlenmittleren Molekulargewicht $M_n$ von nicht mehr als 5000 g/mol angesehen. Der maximale Harzanteil wird dabei durch die Mischbarkeit mit den - gegebenenfalls mit weiteren Stoffen abgemischten - Polymeren begrenzt; es sollte sich jedenfalls zwischen Harz und Polymeren eine homogene Mischung ausbilden.

Als klebrig machende Harze sind die dem Fachmann grundsätzlich bekannten Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze, jeweils für sich oder in Kombination miteinander. Besonders vorteilhaft lassen sich alle mit der Polymermasse kompatiblen, d.h. in ihr löslichen, Harze einsetzen; insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Bevorzugte Terpenphenolharze sind beispielsweise Dertophene T105 und Dertophene T110, ein bevorzugtes hydriertes Kolophoniumderivat ist Foral 85.

Weiter optional kann ein erfindungsgemäßer Polymerschaum Pulver- und granulatförmige Füllstoffe, Farbstoffe und Pigmente, insbesondere auch abrasive und verstärkende, wie z. B. Kreiden ($CaCO_3$) Titandioxide, Zinkoxide und/oder Ruße, enthalten.

Bevorzugt enthält der Polymerschaum eine oder mehrere Kreideform(en) als Füllstoff, besonders bevorzugt Mikrosöhl-Kreide (Fa. Söhlde). Bei bevorzugten Anteilen bis zu 20 Gew.-% verändern sich die klebtechnischen Eigenschaften (Scherfestigkeit bei Raumtemperatur, Sofortklebkraft auf Stahl und PE) durch den Füllstoffzusatz praktisch nicht. Ebenfalls bevorzugt können verschiedene organische Füllstoffe enthalten sein.

Geeignete Additive für den erfindungsgemäßen Polymerschaum sind außerdem - unabhängig gewählt von anderen Additiven - nicht expandierbare Polymerhohlkugeln, Polymervollkugeln, Glashohlkugeln, Glasvollkugeln, keramische Hohlkugeln, keramische Vollkugeln und/oder Kohlenstoffvollkugeln ("Carbon Micro Balloons").

Weiterhin kann der erfindungsgemäße Polymerschaum schwerentflammbare Füllstoffe, beispielsweise Ammoniumpolyphosphat; elektrisch leitfähige Füllstoffe, beispielsweise Leitruß, Kohlenstofffasern und/oder silberbeschichtete Kugeln; ferromagnetische Additive, beispielsweise Eisen-(III)-Oxide; Alterungsschutzmittel, Lichtschutzmittel und/oder Ozonschutzmittel enthalten.

Optional können Weichmacher enthalten sein. Als Weichmacher können z.B. niedermolekulare Polyacrylate, Phthalate, wasserlösliche Weichmacher, Weichharze, Phosphate oder Polyphosphate zudosiert werden.

Die Beigabe von Kieselsäuren, vorteilhaft von gefällter, mit Dimethyldichlorsilan oberflächenmodifizierter Kieselsäure, kann genutzt werden, um die Wärmescherfestigkeit des Polymerschaums einzustellen.

Ein weiterer Gegenstand der Erfindung ist ein Verfahren zur Herstellung eines Polymerschaums, das die folgenden Schritte umfasst:

a) Mischen zumindest des Matrixmaterials des Polymerschaums mit Luft;
b) Einmischen von Mikroballons in die Mischung des Schrittes a);
c) Entfernen von Luftanteilen aus der Mischung unter Anwendung eines Druckgefälles, so dass der Polymerschaum 6 bis 16 Vol.-%, bezogen auf das Gesamtvolumen des Polymerschaums, Luft enthält;
d) Ausbringen der Mischung;

wobei die Schritte a) und b) gleichzeitig oder nacheinander ablaufen,

Schritt c) nach Schritt a) erfolgt und

Schritt d) nach den Schritten a) bis c) erfolgt,

der Polymerschaum eine Haftklebemasse ist,

die Mikroballons in ihrem Grundzustand expandierbare, mit niedrigsiedenden Flüssigkeiten oder verflüssigtem Gas gefüllte und eine thermoplastische Polymerhülle aufweisende Mikrohohlkugeln sind und,

sofern unexpandierte und/oder noch weiter zu expandierende Mikroballons in die Mischung eingebracht werden, deren Expansion jederzeit nach ihrem Einbringen erfolgen kann. Die Zugabe der Mikroballons kann also zu einem vorhandenen Matrixmaterial-LuftGemisch erfolgen, oder es werden das Matrixmaterial, Luft und die Mikroballons gleichzeitig miteinander vermischt. Die Schritte a) und b) können somit sowohl gleichzeitig bzw. als ein einziger Schritt als auch nacheinander ablaufen. Schritt c) kann nach den Schritten a) und b), aber auch nach Schritt a) und vor Schritt b) erfolgen.

"Entfernen von Luftanteilen" bedeutet, dass die Luft nicht vollständig, sondern nur zu einem gewissen Anteil aus der Mischung entfernt wird.

Die Schäumung selbst kann bereits nach den Schritten a) und b), aber auch erst nach dem Ausbringen der Mischung stattfinden. Sofern unexpandierte und/oder noch weiter zu expandierende Mikroballons in die Mischung eingebracht werden, kann deren Expansion insbesondere nach den Schritten b), c) oder d) erfolgen.

In einer bevorzugten Ausgestaltungsform des erfindungsgemäßen Verfahrens wird der Polymerschaum nach seiner Erzeugung zwischen mindestens zwei rotierenden Walzen geführt bzw. ausgeformt. Besonders bevorzugt wird der Polymerschaum nach seiner Erzeugung zwischen mindestens zwei mit gleicher Geschwindigkeit gegenläufig rotierenden Walzen zwischen zwei Trennpapieren ausgeformt.

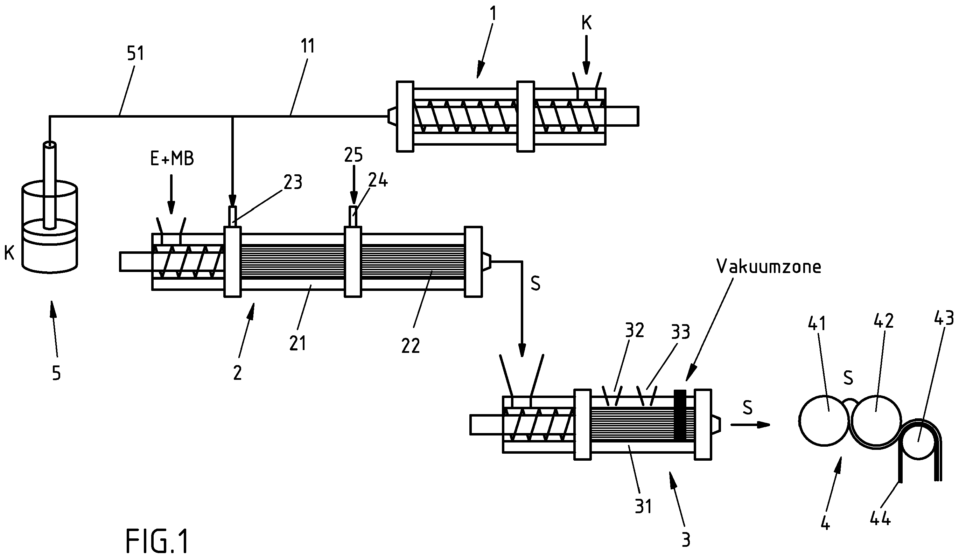

Mögliche Ausgestaltungen des erfindungsgemäßen Verfahrens werden nachstehend anhand der Figuren 1 bis 4 erläutert.

In einem Verfahren gemäß Figur 1 werden die Edukte E, welche die zu schäumende Matrix bilden sollen, und die Mikroballons MB in ein kontinuierliches Mischaggregat 2, beispielsweise in einen Planetwalzenextruder (PWE), aufgegeben. Im Einzugsbereich des Mischaggregats wird gleichzeitig Luft in den Mischteil 21 gefördert, beispielsweise mittels einer im Einzugsbereich verwendeten Stopfschnecke.

Es besteht aber auch die Möglichkeit, vorgefertigte lösemittelfreie Matrixmasse K durch einen Förderextruder 1, wie zum Beispiel einen Einschneckenextruder (ESE), und einen beheizten Schlauch 11 oder durch eine Fassschmelze 5 und einen beheizten Schlauch 51 in das kontinuierliche Mischaggregat 2 mittels Einspritzung 23 vorzulegen und die Mikroballons MB im Einzugsbereich oder über einen Sidefeedereingang im vorderen Bereich des Mischaggregats hinzu zu dosieren. Alternativ können die Mikroballons in einer Paste unter Überdruck, beispielsweise am Dosierpunkt 24, injiziert werden.

Die Mikroballons MB werden nun mit der lösungsmittelfreien Masse K oder mit den Edukten E zu einem homogenen Massesystem im Mischaggregat 2 vermischt und in der ersten Heiz- und Mischzone 21 des Mischaggregats 2 auf die Temperatur, die zur Expansion der Mikroballons notwendig ist, aufgeheizt.

Im zweiten Einspritzring 24 können weitere Additive oder Füllstoffe 25, wie zum Beispiel Vernetzungspromotoren, hinzu gegeben werden.

Um thermisch sensitive Additive oder Füllstoffe 25 einarbeiten zu können, werden der Einspritzring 24 und die zweite Heiz- und Mischzone 22 vorzugsweise gekühlt.

Das geschäumte Massesystem S wird anschließend in ein weiteres kontinuierliches Mischaggregat 3, zum Beispiel in einen Doppelschneckenextruder (DSE), übergeben und kann nun mit weiteren Füllstoffen oder Additiven, wie zum Beispiel Vernetzungskomponenten und/oder Katalysatoren, unter moderaten Temperaturen abgemischt werden, ohne die expandierten Mikroballons MB zu zerstören. Diese Komponenten können an den Dosierpunkten 32 und 33 zugegeben werden. Es empfiehlt sich, die Mischzone des Mischaggregats 3 mit einer Manteltemperierung 31 zu versehen.

Die Übergabe vom ersten in das zweite Mischaggregat kann entweder im freien Fall oder mittels einer Rohr- oder Schlauchverbindung erfolgen. Dabei hat sich eine Pumpe zum kontrollierten Druckaufbau als hilfreich erwiesen.

Vor dem Austritt der Zusammensetzung aus der Düse wird in einer Vakuum- bzw. Unterdruckzone die eingearbeitete Luft über den angelegten Unterdruck kontrolliert entzogen. Zwischen dem letzten Dosierpunkt und der Vakuumzone wird mittels Knetelementen oder eines Blisters eine Dichtung aufgebaut, um einen konstanten Unterdruck zu erzeugen. Die geschäumte Masse mit dem wunschgemäß eingestellten Luft-Mikroballonanteil wird in einer Düse vorverteilt, wobei der Druck zwischen Extruderausgang und Düse auch hier mittels einer Pumpe geregelt wird.

Mit einem Walzenauftragswerk 4 wird die geschäumte Masse S kalandriert und auf ein bahnförmiges Trägermaterial 44, beispielsweise auf Trennpapier, beschichtet. Es kann noch eine Nachschäumung im Walzenspalt stattfinden. Das Walzenauftragswerk 4 besteht bevorzugt aus einer Rakelwalze 41 und einer Beschichtungswalze 42. An die letztere wird das Trennpapier 44 über eine Aufnahmewalze 43 geführt, so dass das Trennpapier 44 die geschäumte Masse S von der Beschichtungswalze 42 übernimmt.

Bei sehr hohen Schichtdicken ist es vorteilhaft, die Masse zwischen zwei Trennpapieren auszuformen, welche über die Walzen 41 und 42 geführt werden, so dass sich die geschäumte Masse zwischen diesen Trennpapieren befindet. Dieses Vorgehen verbessert das Beschichtungsbild.

Bei der Walzenkalandrierung werden die expandierten Mikroballons MB wieder in die Polymermatrix der geschäumten Masse S gedrückt und somit eine glatte bzw. bei der Schäumung von Selbstklebemassen eine permanent (nicht reversibel) klebende Oberfläche bei sehr niedrigen Raumgewichten von bis zu 150 kg/m$^3$ erzeugt. Zudem werden in der Oberfläche der Schaumschicht enthaltende Gasblasen unter der Einwirkung der Walzen noch einmal in die Matrix eingemengt und gleichmäßig verteilt.

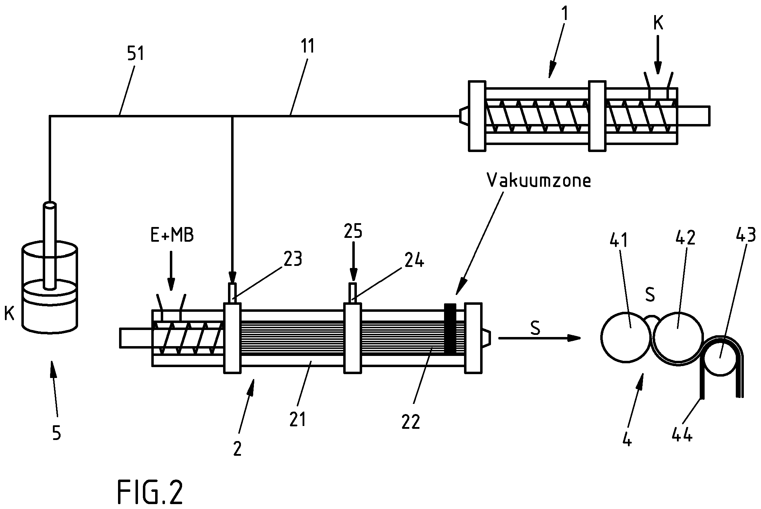

Das erfindungsgemäße Verfahren lässt sich auch ohne das zweite kontinuierliche Mischaggregat 3 durchführen. Eine dementsprechende Verfahrensführung wird in Figur 2 gezeigt, wobei die vorhandenen Bezüge gleichlautend mit denen der Figur 1 sind. Vor der Düse wird die eingearbeitete Luft in einer Vakuumzone über den angelegten Unterdruck kontrolliert entzogen. Alternativ kann über geeignete Querschnittsverengung der Düse der Druck in der Düse so eingestellt werden, dass die unerwünschte Luftmenge kontrolliert gegen den Strom rückwärts ausgetrieben wird.

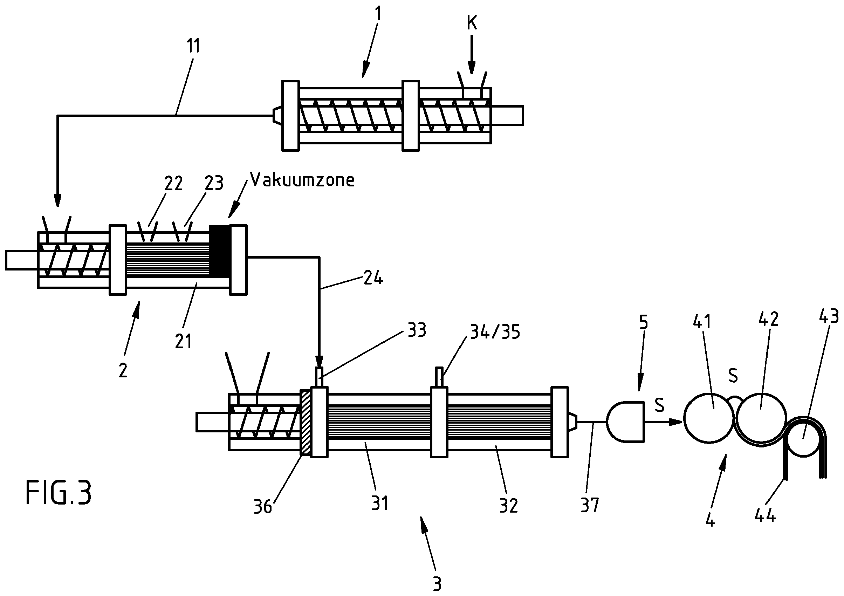

In Figur 3 ist ein Verfahren dargestellt, bei dem die Mikroballons erst nach finaler Abmischung der Klebemasse und nach Austritt aus einer Düse bei Druckabfall expandieren.

Die Matrixkomponenten K werden in einem Fütterextruder 1, beispielsweise in einem Einschneckenförderextruder, aufgeschmolzen und als Polymerschmelze über einen beheizbaren Schlauch 11 oder ein ähnliches Verbindungsstück in ein Mischaggregat 2, beispielsweise einen Doppelschneckenextruder, mit einer temperierbaren Mischzone 21 gefördert. Mit der zugeführten Masse wird gleichzeitig kontrolliert Luft eingezogen. Über die Dosieröffnung 22 wird nun der Beschleuniger zugegeben. Ebenso besteht die Möglichkeit, zusätzliche Additive oder Füllstoffe, wie z.B. Farbpasten, über weitere vorhandene Dosierstellen wie beispielsweise 23 zuzuführen.

Vor Verlassen des Mischaggregats 2 wird der Luftanteil der so abgemischten Polymerschmelze in der Vakuumzone eingestellt. Anschließend wird die Masse über einen beheizbaren Schlauch 24 in ein mit einem Gleitdichtring 36 versehenes weiteres Mischaggregat 3, beispielsweise in einen Planetwalzenextruder, gefördert. Die Gleitringdichtung dient der Unterdrückung eines zusätzlichen Lufteintrags im Mischaggregat 3.
Das Mischaggregat 3 verfügt über mehrere temperierbare Mischzonen 31, 32 und über diverse Einspritz- bzw. Dosiermöglichkeiten 33, 34, 35, um die Polymerschmelze nun mit weiteren Komponenten abzumischen. Über die Dosierstelle 34 kann beispielsweise ein Harz und über 35 eine Mikroballon-Vernetzer-Mischung hinzugegeben und in Mischzone 32 eincompoundiert werden.

Die entstandene Schmelzmischung wird über ein Verbindungsstück oder eine weitere Fördereinheit, wie z.B. eine Zahnradpumpe 37, in eine Düse 5 überführt. Nach Verlassen der Düse, also nach Druckabfall, expandieren die eingearbeiteten Mikroballons, so dass eine geschäumte Selbstklebemasse S entsteht, welche anschließend mittels eines Walzenkalanders 4 zu einer Bahn ausgeformt wird. Die Verarbeitung der Polymerschmelzmischung erfolgt bei der Verfahrensvariante gemäß Figur 3 spätestens ab Zugabe der Mikroballons bis zum Düsenaustritt kontrolliert unter Überdruck ≥ 10 bar, um ein vorzeitiges Expandieren der Mikroballons zu verhindern.

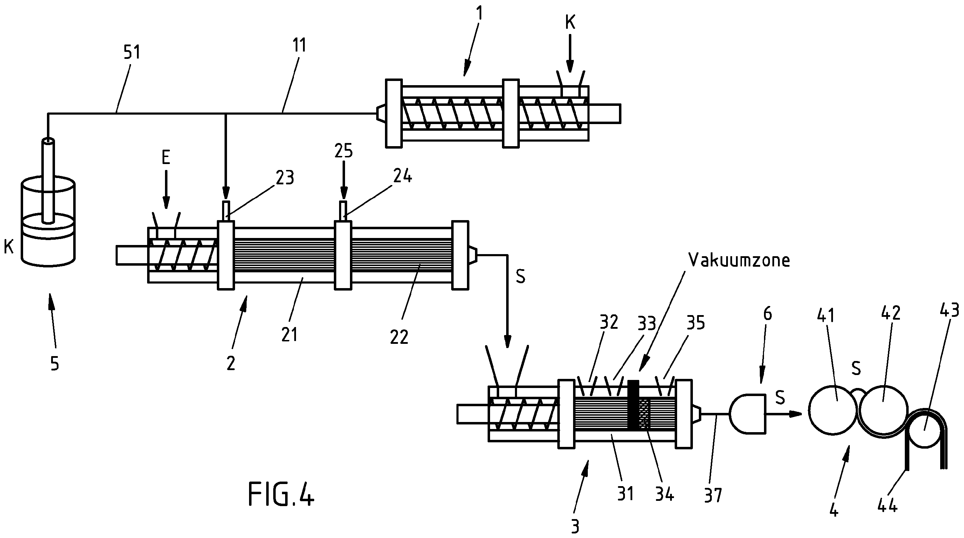

Auch Figur 4 zeigt ein Verfahren, bei dem die Mikroballons erst nach finaler Abmischung der Klebemasse und nach Düsenaustritt bei Druckabfall expandieren, wobei die vorhandenen Bezüge, wenn nicht anders beschrieben, gleichlautend mit denen der Figur 1 sind.

Die nach dem Herstellungsschritt 1 hergestellten Matrixkomponenten K werden in einem Fütterextruder 1 aufgeschmolzen und als Polymerschmelze über einen beheizbaren Schlauch 11 oder ein ähnliches Verbindungsstück in ein Mischaggregat 2, beispielsweise einen Planetwalzenextruder, gefördert. Weitere Zusatzstoffe können über den Einzugsbereich (z.B. Feststoffe, wie Granulate), über die Anlaufringe 23, 24 (flüssige Medien, Pasten, Vernetzungssysteme) oder über zusätzliche Sidefeeder (Feststoffe, Pasten usw.) in das Mischaggregat gegeben werden. Im Einzugsbereich des Mischaggregats 2 wird mittels einer Schnecke Luft in den Mischteil 21 gefördert.

Die Maschinenparameter, wie Temperatur, Drehzahl usw. des Mischaggregats werden so gewählt, dass eine homogene Mischung S entsteht, die eine schaumartige Konsistenz aufweist. In einem weiteren Mischaggregat 3, z.B. einem Doppelschneckenextruder, können außerdem Zusatzstoffe über 32 zugegeben werden, beispielsweise Beschleuniger, Farbpasten usw. Der Luftanteil der so homogenisierten Polymermischung wird nun in der Vakuumzone über regelbare Pumpen eingestellt. Durch die Installierung eines Blisters (Querschnittsverengung) 34 wird das Mischaggregat abgedichtet, so dass über eine Dosierstelle 35 bei Gegendruck > 8 bar eine luftblasenfreie Mikroballonpaste zugeführt werden kann. Die Maschinenparameter des Mischaggregats werden so gewählt, dass weitere Zusatzstoffe gleichmäßig eingearbeitet werden können und die Mikroballons nach Düsenaustritt die Schäumung bewirken.
Die entstandene Schmelzmischung S wird über ein Verbindungsstück oder eine weitere Fördereinheit wie z.B. eine Zahnradpumpe 37 in eine Düse 6 überführt.

Nach Verlassen der Düse, also nach Druckabfall, expandieren die eingearbeiteten Mikroballons, so dass eine geschäumte Selbstklebemasse S entsteht, welche anschließend mittels eines Walzenkalanders 4 bahnförmig ausgeformt wird.

Die Verarbeitung der Polymerschmelzmischung erfolgt auch in der Verfahrensvariante gemäß Figur 4 nach Zugabe der Mikroballon-Paste bis zum Düsenaustritt kontrolliert unter Überdruck ≥ 8 bar, um ein vorzeitiges Expandieren der Mikroballons im Extruder zu verhindern.

Beispiele

Prüfmethoden

Soweit nicht anders angegeben, wurden die Prüfungen unter Standardbedingungen, also bei 23 $\pm$ 1 °C und 50 $\pm$ 5 % rel. Feuchte, durchgeführt.

Raumgewicht/ Dichte:

I.1 Dichtebestimmung mittels Pyknometer:

Das Messprinzip beruht auf der Verdrängung der im Pyknometer befindlichen Flüssigkeit. Dabei wird erst das leere bzw. das mit Flüssigkeit gefüllte Pyknometer gewogen und dann der zu vermessende Körper in das Gefäß gegeben.
Aus den Gewichtsunterschieden berechnet sich die Dichte des Körpers:

Es sei

- $m_0$ die Masse des leeren Pyknometers,
- $m_1$ die Masse des mit Wasser gefüllten Pyknometers,
- $m_2$ die Masse des Pyknometers mit dem Festkörper,
- $m_3$ die Masse des Pyknometers mit dem Festkörper, aufgefüllt mit Wasser,
- $\rho_W$ die Dichte des Wassers bei der entsprechenden Temperatur,
- $\rho_F$ die Dichte des Festkörpers.

Dann ergibt sich die Dichte des Festkörpers zu:

$$\rho_F = \frac{(m_2 - m_0)}{(m_1 - m_0) - (m_3 - m_2)} \cdot \rho_W$$

Es wird pro Muster jeweils eine Dreifachbestimmung durchgeführt. Es ist zu beachten, dass bei diesem Verfahren die Rohdichte (bei porösen Festkörpern, vorliegend einem Schaum, die Dichte basierend auf dem Volumen einschließlich der Porenräume) erhalten wird.

I.2 Schnellverfahren Dichtebestimmung über den Masseauftrag und die Schichtdicke:

Das Raumgewicht beziehungsweise die Dichte $\rho$ einer beschichteten Selbstklebemasse wird über das Verhältnis vom Flächengewicht zu der jeweiligen Schichtdicke bestimmt:

$$\rho = \frac{m}{V} = \frac{MA}{d} \qquad [\rho] = \frac{[kg]}{[m^2] \cdot [m]} = \left[\frac{kg}{m^3}\right]$$

MA = Masseauftrag/Flächengewicht (ohne Linergewicht) in [kg/m²]
d = Schichtdicke (ohne Linerdicke) in [m]

Auch bei diesem Verfahren wird die Rohdichte erhalten.
Diese Dichtebestimmung eignet sich insbesondere zur Bestimmung der Gesamtdichte fertiger, auch mehrschichtiger, Produkte.

Klebkraft Stahl 90°:

Die Bestimmung der Klebkraft auf Stahl erfolgt bei einem Prüfklima von 23 °C +/- 1 °C Temperatur und 50 % +/- 5 % rel. Luftfeuchte. Die Muster werden auf 20 mm Breite zugeschnitten und auf eine geschliffene Stahlplatte (rostfreier Stahl 302 nach ASTM A 666; 50 mm $\times$ 125 mm $\times$ 1,1 mm; glänzende geglühte Oberfläche; Oberflächenrauhigkeit 50 $\pm$ 25 nm arithmetische Durchschnittsabweichung von der Basislinie) geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann. Danach erfolgt das Anrollen des Prüfmusters auf den Stahluntergrund. Hierzu wird das Tape mit einer 2 kg Rolle fünfmal hin und her bei einer Aufrollgeschwindigkeit von 10 m/min überrollt. Unmittelbar nach dem Anrollen wird die Stahlplatte in eine spezielle Halterung einer Zwick-Zugprüfmaschine geschoben. Der Klebestreifen wird über sein freies Ende in einem Winkel von 90° mit einer Geschwindigkeit von 300 mm/min nach oben abgezogen, und die dafür notwendige Kraft wird ermittelt. Die Messergebnisse sind in N/cm angegeben und über drei Messungen gemittelt.

Ermittlung des Volumenanteils an Hohlräumen, die von der Polymerschaummatrix umschlossen sind:

Ausgangspunkt dieser Bestimmung ist die Dichte des geschäumten (also mit expandierten Mikroballons versehenen) Matrixmaterials ohne eingearbeitete Luft. Es wird zunächst die Dichte des eingearbeitete Luft enthaltenden Polymerschaums ermittelt. Aus dieser Dichte wird über

$$\rho_{(\text{Luftanteil 0\%})} - \rho_{(\text{Luftanteil x\%})}$$

die Massendifferenz pro Volumeneinheit ermittelt. Nach

$$V = m / \rho_{(\text{Luftanteil 0\%})},$$

wobei m die eben ermittelte Massendifferenz ist, ergibt sich das Volumen des von der eingearbeiteten Luft verdrängten Polymerschaums ohne eingearbeitete Luft. Setzt man dieses ins Verhältnis zum bei der Dichteermittlung zugrunde gelegten Volumen, ergibt sich der Volumenanteil der von der Polymerschaummatrix umschlossenen Hohlräume. In analoger Weise wird der Volumenanteil der von den Mikroballons gebildeten Hohlräume mit der Dichte des Matrixmaterials (ohne Mikroballons, ohne eingearbeitete Luft) als Bezugsgröße ermittelt.

Das Eigengewicht eingebrachter Luft bzw. der gasgefüllten Mikroballons wird bei der Ermittlung der entsprechenden Volumenanteile vernachlässigt.

Stauchhärte:

Die Stauchhärte ist die bei einer festgelegten Verformung des Schaumstoffes beim Belastungsvorgang ermittelte Druckspannung in N/cm$^2$.

Aus dem zu prüfenden Material wurden Prüfkörper mit einer Abmessung von 50 x 50 mm zugeschnitten. Die zugeschnittenen Muster wurden 24 h im Prüfklima konditioniert und anschließend mittig unter die Druckplatten einer Zug-/Druckprüfmaschine mit Stauchvorrichtung gelegt. Die Druckplatten wurden mit einer Geschwindigkeit von 10 mm/min soweit zusammengefahren, dass die Probe einer Vorkraft von 0,1 kPa ausgesetzt war. Bei Erreichen dieser Vorkraft wurde der Abstand der Druckplatten zueinander gemessen und somit die Dicke des Prüfkörpers vor dem Stauchen ermittelt.

Der Prüfkörper wurde nun viermal mit einer Geschwindigkeit von 50 mm/min um den angegebenen Prozentsatz gestaucht und wieder bis auf die Ausgangsdicke entlastet, wobei jeweils die Druckspannung bei der geforderten Verformung ermittelt wurde. Die gemessenen Werte wurden auf den Anfangsquerschnitt der Proben von 2500 mm$^2$ bezogen in N/cm$^2$ berechnet. Darüber hinaus wurde die von der Probe im jeweils ersten Stauchungszyklus verrichtete Rückstellarbeit ermittelt und als $\Delta$W angegeben.

Tabelle 1: Verwendete Rohstoffe:

| Chemische Verbindung | Handelsname | Hersteller | CAS-Nr. |
|---|---|---|---|
| Bis-(4-*tert*-butylcyclohexyl)peroxydicarbonat | Perkadox® 16 | Akzo Nobel | 15520-11-3 |
| 2,2'-Azobis(2-methylpropionitril), AIBN | Vazo® 64 | DuPont | 78-67-1 |
| Pentaerythrittetraglycidether | Polypox® R16 | UPPC AG | 3126-63-4 |
| | Denacol™ EX-411 | Nagase Chemtex Corp. | |
| 3,4-Epoxycyclohexylmethyl-3,4-epoxycyclohexancarboxylat | Uvacure® 1500 | Cytec Industries Inc. | 2386-87-0 |
| Triethylentetramin | Epikure® 925 | Hexion Speciality Chemicals | 112-24-3 |

(fortgesetzt)

| Chemische Verbindung | Handelsname | Hersteller | CAS-Nr. |
|---|---|---|---|
| Mikroballons (MB) | Expancel 051 DU 40 | Expancel Nobel Industries | |
| Terpenphenolharz | Dertophene T110 | D.R.T. | 73597-48-5 |
| Wässrige Rußpigment-Präparation (40% Pigmentanteil) | Levanyl Schwarz N-LF | Lanxess Deutschland GmbH | |
| Kokosalkyl-N, N-Polyoxyethylen-Amin | Ethomeen C/25 | Akzo | 61791-14-8 |
| Paste: Expancel 051 DU 40 41% in Levanyl Schwarz N-LF | | | |
| Paste: Expancel 051 DU 40 55% in Ethomeen C/25 | | | |

Herstellungsschritt H1 zum Basispolymer K1:

Ein für radikalische Polymerisationen konventioneller Reaktor wurde mit 54,4 kg 2-Ethylhexylacrylat, 20,0 kg Methylacrylat, 5,6 kg Acrylsäure und 53,3 kg Aceton/ Isopropanol (94:6) befüllt. Nach 45minütiger Durchleitung von Stickstoffgas unter Rühren wurde der Reaktor auf 58 °C hochgeheizt und 40 g AIBN hinzugegeben. Anschließend wurde das äußere Heizbad auf 75 °C erwärmt und die Reaktion konstant bei dieser Außentemperatur durchgeführt. Nach 1 h wurden erneut 40 g AIBN zugegeben, und nach 4 h wurde mit 10 kg Aceton/Isopropanol-Gemisch (94:6) verdünnt. Nach 5 sowie nach 7 h wurde jeweils mit 120 g Bis-(4-tert-butylcyclohexyl)-peroxydicarbonat nachinitiiert. Nach 22 h Reaktionszeit wurde die Polymerisation abgebrochen und die Mischung auf Raumtemperatur abgekühlt. Das erhaltene Polyacrylat hat einen K-Wert von 58,8, einen Feststoffgehalt von 55,9 %, ein mittleres Molekulargewicht von $M_w$ = 746.000 g/mol, eine Polydispersität D ($M_w/M_n$) von 8,9 und eine statische Glasübergangstemperatur $T_g$ von -35,6°C.

Herstellungsschritt H2: Aufkonzentration des Schmelzhaftklebers

Die Acrylatcopolymere (Basispolymer K1) werden mittels Einschneckenextruder (Aufkonzentrationsextruder, Berstorff GmbH, Deutschland) weitestgehend vom Lösemittel befreit (Restlösemittelgehalt ≤ 0,3 Gew.-%; vgl. bei den einzelnen Beispielen). Exemplarisch sind hier die Parameter der Aufkonzentration dargestellt. Die Drehzahl der Schnecke betrug 150 U/min, der Motorstrom 15 A, es wurde ein Durchsatz von 58,0 kg flüssig/h realisiert. Zur Aufkonzentration wurde an 3 verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8%.

Tabelle 2: Zusammensetzungen der Versuchsmuster in den Beispielen

| Beispiel | Basis Klebmasse K | Zusatzstoffe | Anteil der Zusatzstoffe [w-%] | Nach dem Herstellungsverfahren gemäß Figur |
|---|---|---|---|---|
| 1 - 5 | K1 | Polypox R16 | 0,1354 | 4 |
| | | Epikure 925 | 0,1414 | |
| | | Expancel 051 DU 40 | 0,70 | |
| | | Dertophene T110 | 28,50 | |
| | | Levanyl schwarz N-LF | 1,00 | |

(fortgesetzt)

| Beispiel | Basis Klebmasse K | Zusatzstoffe | Anteil der Zusatzstoffe [w-%] | Nach dem Herstellungsverfahren gemäß Figur |
|---|---|---|---|---|
| 6 - 10 | K1 | Polypox R16 | 0,1354 | 1 |
| | | Epikure 925 | 0,1414 | |
| | | Expancel 051 DU 40 | 0,70 | |
| | | Dertophene T110 | 28,09 | |
| | | Levanyl N-LF | 0,47 | |

Entwicklung der Verklebungsfestigkeit in Abhängigkeit vom eingeschlossenen Luftanteil: Die Selbstklebemassen der Beispiele 1 - 5 wurden nach dem erfindungsgemäßen Verfahren gemäß Figur 4 hergestellt. Die Mikroballons wurden also als Paste mit 41% Anteil in Levanyl N-LF unter Gegendruck > 8 bar zudosiert. Der Überdruck von mindestens 8 bar wird bis Düsenaustritt beibehalten, so dass die Mikroballons erst nach Verlassen der Düse expandieren. Durch den der Schäumung vorgeschalteten Entgasungsschritt kann über eine regelbare Vakuumpumpe kontrolliert Luft entzogen werden.

Bei den Versuchsmustern der Beispiele 1 - 5 wurde jeweils ein unterschiedlich starker Unterdruck (1013 - 100 mbar absolut) angelegt, so dass abgestufte Luftanteile im Klebemassensystem erzeugt wurden.

Alle Muster sind einschichtige Klebemassensysteme, welche auf einen Liner beschichtet wurden. Die entsprechenden Testergebnisse sind in Tabelle 3 dargestellt.

Tabelle 3: Beispiele 1 - 5 - Ergebnisse

| Beispiel | | | 1 (Vgl.) | 2 | 3 | 4 | 5 (Vgl.) |
|---|---|---|---|---|---|---|---|
| | | | | | | | |
| Masseauftrag | | [g/m$^2$] | 1663 | 1548 | 1475 | 1415 | 1347 |
| Schichtdicke | | [$\mu$m] | 1996 | 1985 | 1980 | 2004 | 1998 |
| Dichte | | [kg/m$^3$] | 833 | 780 | 745 | 706 | 674 |
| Druck in der Vakuumzone | | [mbar] | 100 | 250 | 400 | 700 | 1013 |
| Klebkraft 90° | sofort *Bruchverhalten* | [N/cm] | 17,3 *adhäsiv* | 18,2 *adhäsiv* | 20,1 *adhäsiv* | 15,4 *adhäsiv* | 18,0 *adhäsiv* |
| | 3 d Aufziehen *Bruchverhalten* | [N/cm] | 39,5 *adhäsiv* | 47,2 *tlw. Spalten* | 56,5 *Spalten* | 48,7 *Spalten* | 45,5 *Spalten* |
| Luftanteil | | [Vol.-%] | 0 | 6,4 | 10,6 | 15,2 | 19,1 |
| Vgl. = Vergleichsbeispiel | | | | | | | |

Ohne eingeschlossene Luft, wie in Beispiel 1, ist die kohäsive Kraft des Klebebandes so groß, dass sich dieses bei Abziehen nach 3 d Aufziehen adhäsiv vom zu untersuchenden Haftuntergrund abschält.

Bei noch relativ geringen Luftanteilen (Beispiel 2) beginnt das Klebeband beim Abziehen bereits zu spalten, und die gemessene Kraft erreicht ein höheres Niveau.

Bei einem Anteil von 10,6 Vol-% Luft wie in Beispiel 3 wird ein vollständiges Schaumspalten beobachtet, und die Verklebungsfestigkeit hat um 43% zugenommen.

Stauchhärte-Verhalten in Abhängigkeit vom eingeschlossenen Luftanteil:

Die Versuchsmuster der Beispiele 6 - 10 wurden nach dem Verfahren gemäß Figur 1 hergestellt. Dass heißt, die Mikroballons wurden als Feststoff (Pulver) zudosiert und die Schäumung erfolgt bereits vor finaler Abmischung der Polymermasse und vor der Entgasung.

Bei der Entgasung bereits geschäumter Polymermasse wird neben dem Entziehen der Luft auch ein Teil stark expandierter Mikroballons zerstört. Die Testergebnisse sind in Tabelle 4 dargestellt.

Tabelle 4: Beispiele 6 - 10 - Ergebnisse

| Beispiel | Masseauftrag [g/m²] | Schichtdicke [µm] | Dichte [kg/m³] | Druck in der Vakuumzone [mbar] | Luftanteil [Vol-%] | Zyklus | F [N/cm²] Stauchung | | | | ΔW [J/m²] |
|---|---|---|---|---|---|---|---|---|---|---|---|
| | | | | | | | 3% | 7% | 10% | 14% | |
| 6 | 801 | 1169 | 685 | 1013 | 15,6 | 1 | 2,83 | 4,79 | 5,9 | 6,85 | 218,38 |
| | | | | | | 2 | 0,46 | 3,47 | 4,94 | 6,21 | |
| | | | | | | 3 | 0,13 | 3,02 | 4,62 | 5,97 | |
| | | | | | | 4 | 0,04 | 2,73 | 4,41 | 5,79 | |
| 7 | 879 | 1120 | 785 | 750 | 11,2 | 1 | 1,83 | 4,52 | 5,95 | 7,09 | 240,69 |
| | | | | | | 2 | 0,44 | 3,02 | 4,98 | 6,49 | |
| | | | | | | 3 | 0,14 | 2,43 | 4,59 | 6,24 | |
| | | | | | | 4 | 0,01 | 1,99 | 4,36 | 6,06 | |
| 8 | 958 | 1138 | 842 | 600 | 7,3 | 1 | 2,97 | 5,76 | 7,19 | 8,5 | 300,85 |
| | | | | | | 2 | 0,32 | 3,98 | 6,01 | 7,72 | |
| | | | | | | 3 | 0,06 | 3,29 | 5,58 | 7,35 | |
| | | | | | | 4 | 0,01 | 2,82 | 5,3 | 7,21 | |
| 9 (Vgl.) | 998 | 1103 | 905 | 400 | 3,9 | 1 | 2,35 | 6,05 | 8,04 | 9,63 | 316,64 |
| | | | | | | 2 | 0,36 | 3,88 | 6,64 | 8,72 | |
| | | | | | | 3 | 0,17 | 2,9 | 6,07 | 8,29 | |
| | | | | | | 4 | 0,07 | 2,15 | 5,72 | 8,05 | |
| 10 (Vgl.) | 1028 | 1109 | 927 | 200 | 0,5 | 1 | 3,45 | 7,25 | 9,59 | 11,36 | 359,5 |
| | | | | | | 2 | 0,22 | 4,7 | 7,83 | 10,15 | |
| | | | | | | 3 | 0 | 3,66 | 7,16 | 9,72 | |
| | | | | | | 4 | 0 | 2,86 | 6,71 | 9,4 | |

Ein Gemisch aus Luftblasen und expandierten Mikroballons beeinflusst das Stauchhärte-Verhalten positiv. Je mehr Luft eingeschlossen ist, desto leichter lässt sich das geschäumte Klebeband komprimieren.

Mit steigendem Luftanteil sinkt darüber hinaus die von der Probe nach erfolgter Stauchung zu verrichtende Arbeit, um die Probendicke wieder auf den Ausgangswert zurückzuführen (Rückstellarbeit ΔW). Auch das Rückstellvermögen wird durch die enthaltene Luft somit verbessert.

**Patentansprüche**

1. Polymerschaum, umfassend von Mikroballons gebildete Hohlräume sowie 6 bis 16 Vol.-%, bezogen auf das Gesamtvolumen des Polymerschaums, Hohlräume, die von der Polymerschaummatrix umschlossen sind, **dadurch gekennzeichnet, dass** der Polymerschaum eine Haftklebemasse ist und
die Mikroballons in ihrem Grundzustand expandierbare, mit niedrigsiedenden Flüssigkeiten oder verflüssigtem Gas gefüllte und eine thermoplastische Polymerhülle aufweisende Mikrohohlkugeln sind.

2. Polymerschaum gemäß Anspruch 1, **dadurch gekennzeichnet, dass** mindestens 90 % aller Hohlräume, die von der Polymerschaummatrix umschlossen sind, einen maximalen Durchmesser von $\leq 200$ $\mu$m aufweisen.

3. Polymerschaum gemäß mindestens einem der vorstehenden Ansprüche, **dadurch gekennzeichnet, dass** der Polymerschaum zu mindestens 25 Gew.-%, bezogen auf das Gesamtgewicht des Polymerschaums, ein oder mehrere Polymer(e), ausgewählt aus der Gruppe bestehend aus Polyacrylaten, Naturkautschuken und Synthesekautschuken, enthält.

4. Polymerschaum gemäß mindestens einem der vorstehenden Ansprüche, **dadurch gekennzeichnet, dass** mindestens 90 % aller von Mikroballons gebildeten Hohlräume einen maximalen Durchmesser von 10 bis 500 $\mu$m aufweisen.

5. Verfahren zur Herstellung eines Polymerschaums, umfassend die folgenden Schritte:

   a) Mischen zumindest des Matrixmaterials des Polymerschaums mit Luft;
   b) Einmischen von Mikroballons in die Mischung des Schrittes a);
   c) Entfernen von Luftanteilen aus der Mischung unter Anwendung eines Druckgefälles, so dass der Polymerschaum 6 bis 16 Vol.-%, bezogen auf das Gesamtvolumen des Polymerschaums, Luft enthält;
   d) Ausbringen der Mischung,

   wobei die Schritte a) und b) gleichzeitig oder nacheinander ablaufen,

   Schritt c) nach Schritt a) erfolgt,
   Schritt d) nach den Schritten a) bis c) erfolgt,

   der Polymerschaum eine Haftklebemasse ist,
   die Mikroballons in ihrem Grundzustand expandierbare, mit niedrigsiedenden Flüssigkeiten oder verflüssigtem Gas gefüllte und eine thermoplastische Polymerhülle aufweisende Mikrohohlkugeln sind und, sofern unexpandierte und/oder noch weiter zu expandierende Mikroballons in die Mischung eingebracht werden, deren Expansion jederzeit nach ihrem Einbringen erfolgen kann.

6. Verfahren gemäß Anspruch 5, **dadurch gekennzeichnet, dass** der Polymerschaum nach seiner Erzeugung zwischen mindestens zwei rotierenden Walzen ausgeformt wird.

**Claims**

1. Polymer foam comprising cavities formed by microballoons and also 6 to 16 vol%, based on the total volume of the polymer foam, of cavities surrounded by the polymer foam matrix, **characterized in that** the polymer foam is a pressure sensitive adhesive and the microballoons are hollow microspheres that can be expanded in their basic state, are filled with low-boiling liquids or liquefied gas and have a thermoplastic polymer shell.

2. Polymer foam according to Claim 1, **characterized in that** at least 90% of all the cavities surrounded by the polymer foam matrix have a maximum diameter of ≤ 200 µm.

3. Polymer foam according to at least one of the preceding claims, **characterized in that** the polymer foam comprises at least 25 wt%, based on the total weight of the polymer foam, of one or more polymers selected from the group consisting of polyacrylates, natural rubbers and synthetic rubbers.

4. Polymer foam according to at least one of the preceding claims, **characterized in that** at least 90% of all the cavities formed by microballoons have a maximum diameter of 10 to 500 µm.

5. Method for producing a polymer foam, comprising the following steps:

   a) mixing at least the matrix material of the polymer foam with air;
   b) mixing microballoons into the mixture from step a);
   c) removing air fractions from the mixture, using a pressure gradient such that the polymer foam contains 6 to 16 vol% of air, based on the total volume of the polymer foam;
   d) delivering the mixture,

   where steps a) and b) take place at the same time or in succession,

   step c) takes place after step a),
   step d) takes place after steps a) to c),

   the polymer foam is a pressure sensitive adhesive, the microballoons are hollow microspheres that can be expanded in their basic state, are filled with low-boiling liquids or liquefied gas and have a thermoplastic polymer shell and, where unexpanded microballoons and/or microballoons for further expansion are incorporated into the mixture, they may be expanded at any time after the introduction thereof.

6. Method according to Claim 5, **characterized in that** the polymer foam, after it has been produced, is shaped between at least two rotating rolls.

## Revendications

1. Mousse polymère, comprenant des cavités formées par des microballons, ainsi que 6 à 16 % en volume, par rapport au volume total de la mousse polymère, de cavités qui sont entourées par la matrice de la mousse polymère, **caractérisée en ce que**
   la mousse polymère est une masse adhésive de contact et
   les microballons sont à leur état de base des microbilles creuses expansibles, remplies avec des liquides de point d'ébullition faible ou du gaz liquéfié, et comprenant une enveloppe polymère thermoplastique.

2. Mousse polymère selon la revendication 1, **caractérisée en ce qu'**au moins 90 % de toutes les cavités qui sont entourées par la matrice de la mousse polymère présentent un diamètre maximal ≤ 200 µm.

3. Mousse polymère selon au moins l'une quelconque des revendications précédentes, **caractérisée en ce que** la mousse polymère contient au moins 25 % en poids, par rapport au poids total de la mousse polymère, d'un ou de plusieurs polymères choisis dans le groupe constitué par les polyacrylates, les caoutchoucs naturels et les caoutchoucs de synthèse.

4. Mousse polymère selon au moins l'une quelconque des revendications précédentes, **caractérisée en ce qu'**au moins 90 % de toutes les cavités formées par des microballons présentent un diamètre maximal de 10 à 500 µm.

5. Procédé de fabrication d'une mousse polymère, comprenant les étapes suivantes :

   a) le mélange au moins du matériau de matrice de la mousse polymère avec de l'air ;
   b) l'incorporation de microballons dans le mélange de l'étape a) ;
   c) l'élimination de fractions d'air du mélange en utilisant un gradient de pression, de sorte que la mousse polymère contienne 6 à 16 % en volume d'air, par rapport au volume total de la mousse polymère ;
   d) l'application du mélange,

les étapes a) et b) se déroulant simultanément ou successivement,

> l'étape c) ayant lieu après l'étape a),
> l'étape d) ayant lieu après les étapes a) à c),

la mousse polymère étant une masse adhésive de contact, les microballons étant à leur état de base des microbilles creuses expansibles, remplies avec des liquides de point d'ébullition faible ou du gaz liquéfié, et comprenant une enveloppe polymère thermoplastique, et si des microballons non expansés et/ou devant encore être soumis à une expansion supplémentaire sont introduits dans le mélange, leur expansion pouvant avoir lieu à tout moment après leur introduction.

6. Procédé selon la revendication 5, **caractérisé en ce que** la mousse polymère est façonnée entre au moins deux cylindres rotatifs après sa formation.

FIG.1

Vakuumzone

E+MB

K

S

FIG.2

FIG.3

FIG.4

EP 2 796 490 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2105877
- EP 0257984 A1
- DE 3537433 A1
- WO 9531225 A1
- EP 0693097 A1
- WO 9818878 A1
- DE 19730854 A1
- WO 9532851 A1
- EP 1102809 A1
- JP 2006022189 A